# EUROPEAN PATENT SPECIFICATION

(11) **EP 1 215 927 B1**
(45) Date of publication and mention of the grant of the patent: **28.06.2006**
(21) Application number: 01129636.5
(22) Date of filing: 12.12.2001
(51) Int. Cl.: H04Q 7/32, H04Q 7/22

(54) **Method for signaling the imminent deactivation of a mobile terminal in a telecommunications network, and the associated system and terminals**
Anzeige-Verfahren einer nahezu Deaktivierung von einem Mobil-Endgerät in einem Telekommunikationsnetzwerk, System und Endgeräte dafür
Procédé pour indiquer la désactivation imminente d'un terminal mobile dans un réseau de télécommunications, sytème et terminaux correspondants

(30) Priority: 15.12.2000 IT TO001166
(43) Date of publication of application: 19.06.2002
(73) Proprietor: Telecom Italia S.p.A., 20123 Milano (IT)
(72) Inventor: Lupano, Michele, c/o Telecom Italia Lab S.p.A., 10148 Torino (IT)
(74) Representative: Appelt, Christian W.

(56) References cited:
- WO-A-01/10152
- WO-A-98/26622
- US-A- 5 603 095
- US-A- 5 726 636

## Description

### FIELD OF THE INVENTION

The present invention relates to a method for signaling the imminent deactivation of a mobile terminal in a telecommunications network and to the system and terminals capable of implementing the method in accordance with the invention.

### BACKGROUND OF THE INVENTION

Mobile terminals, and cellular telephones in particular, are known in the prior art. Such terminals are capable of exchanging information in the form of voice or data with other mobile or fixed terminals and are supplied electrically by batteries, which in general are rechargeable.

As is known, the batteries of cellular telephones lose their charge during operation. As a result of battery discharge, mobile terminals or cellular telephones are often deactivated abruptly, so that it is not possible to alert the called party of the situation, or to suspend the call appropriately or complete the exchange of information in progress. In such situations, according to the prior art, the fact that the batteries are discharged can be indicated locally to the user of the cellular telephone using various types of signaling methods, in a WLL network to the base station for being exploited by a central operation and maintenance center and a visitor location register (US-A-5 603 095) or, if the mobile terminal energized by the batteries is an emergency cellular telephone normally switched off, to a predetermined number (US-A-5 726 636). For the signaling, occurring locally, at the center or at a terminal under the predetermined number, examples include:
- Audible signaling, whereby an audible warning signal is generated by a piezoelectric buzzer in the cellular telephone;
- Visual signaling, whereby a symbol indicating imminent cellular telephone deactivation is displayed; or
- The set of both methods listed above.

However, none of these methods is capable of "remotizing" the low battery event to the other user or the other terminal involved in the call, even if certain cellular telephone models interrupt communication momentarily at the time the audible signal is generated.

Consequently, a disadvantage of prior art systems is that the partner of the call in progress is given no indication of the mobile terminal's imminent deactivation and, as a result, the other party with whom a conversation is in progress will have no way of knowing on a short notice that the communication will be cut off, and then, why the communication was cut off.

Also in the case of data exchange with other terminals, as in the case of fax transmission, the fact that there is no signaling to the connected terminal that data exchanges will be interrupted, with no provision for activating temporary suspension procedures in order to retrieve the data which has already been exchanged or to print an incomplete fax message and notify the user of the problem that has occurred.

### DISCLOSURE OF THE INVENTION

The object of the present invention is to prevent the situations outlined above from occurring by means of a method and a system whereby the other party and/or terminal involved in the event can be informed of the imminent mobile terminal deactivation.

This object is achieved by the method and system for signaling the imminent deactivation of a mobile terminal, and by a mobile terminal capable of receiving and evaluating a respective signaling, as described in the independent claims.

The method, system and terminal in accordance with the present invention make it possible, for example, to inform the user involved in the call, automatically and without ambiguity, of the fact that call deactivation situations are about to occur and of the reasons for such deactivation when it takes place.

### BRIEF DESCRIPTION OF THE DRAWINGS

The above and other features of the present invention will be better understood from the following description of a preferred embodiment of the invention, which is intended purely as an example and is not to be construed as limiting, taken in conjunction with the accompanying drawings, where:
- Figure 1: represents a block diagram of the system in accordance with the invention; and
- Figure 2: represents a logic diagram of the mobile terminals shown in Figure 1.

### DESCRIPTION OF A PREFERRED EMBODIMENT OF THE INVENTION

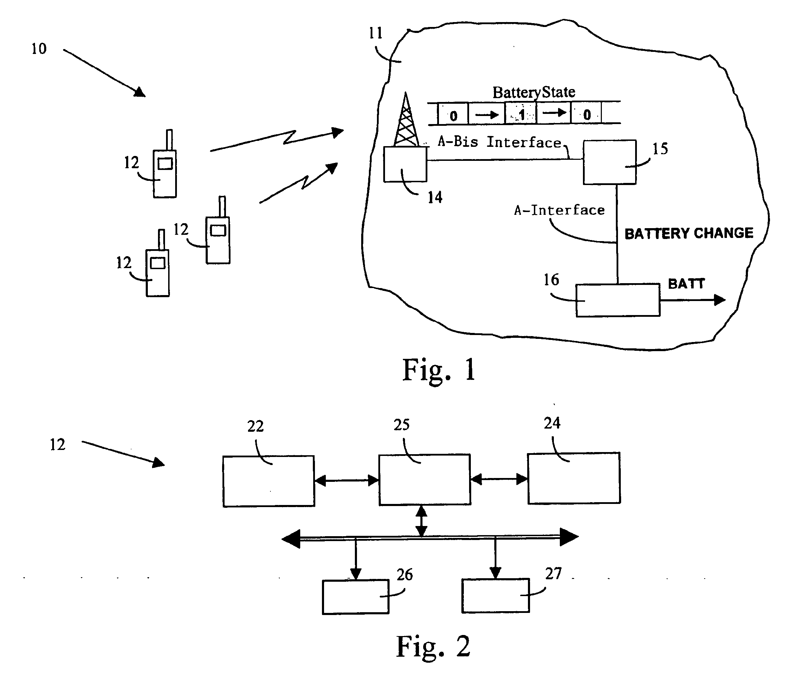

A preferred embodiment of the invention will be described with reference to Figure 1, which shows a system 10 comprising a telecommunications network for fixed and mobile telephony (network infrastructure or network) 11 and a multiplicity of mobile terminals 12, e.g., cellular telephones, capable of exchanging information with the network 11.

Each terminal 12 (Figure 1 and Figure 2) comprises a radio frequency circuit (RF circuit) 22 of known type capable of exchanging information with the network 11 and a control circuit (microchip) 25 connected to the RF circuit 22 and capable of controlling the exchange of information with the network 11 on the basis of programs stored in said microchip 25.

In addition, each terminal 12 comprises, for example, a buzzer 26, a display 27 and a battery 24, all of which are of known type and are connected to the microchip 25 in accordance with the prior art.

The microchip 25 provided in terminal 12 is capable of measuring the state of charge of battery 24 at regular intervals using prior art techniques, and of causing an audible signal to be generated by buzzer 26 and/or a visual signal to be presented on display 27 if it detects that the charge level of battery 24 is below a predetermined threshold.

In response to a call procedure, the RF circuit sets up a radio connection with a terminal or cell in the network 11, doing so under the control of the microchip 25 and in accordance with the prior art. The connection thus set up permits bidirectional exchange of information blocks comprising both voice traffic and control traffic for the radio connection.
In particular, the RF circuit 22 transmits a radio interface message called the "MEASUREMENT REPORT" to the network 11 at regular intervals during the connection, e.g., with a period of approximately 0.5 seconds for GSM (Global System for Mobile Communications) systems. This message contains radio measurements carried out on the cell with which the connection is active (the server cell) and on the cells adjacent to the serving cell so that procedures for transferring the call from the serving cell to another cell (handover procedures) can be managed when necessary.

In accordance with the present invention, the microchip 25 is capable of inserting further information in addition to the prior-art radio measurements in the "MEASUREMENT REPORT" messages to be transmitted; this further bit will be designated hereunder as BatteryState and indicates the stage of charge of the battery 24, e.g.:
BatteryState = 0 : battery charged; and
BatteryState = 1 : battery discharged.

Thus, in accordance with one of the distinguishing features of the present invention, the terminal 12 is capable of transmitting the additional BatteryState bit concerning the state of charge of battery 24 to the network 11, doing so continuously and with a periodicity linked to the characteristics of the network 11.

In the case of a GSM network, for example, the terminal 12 is capable of providing the network 11 infrastructure with the updated state of charge for the battery 24 in the calling terminal 12 every 0.5 seconds.

The network 11 infrastructure comprises one or more Base Transceiver Stations (BTS stations) 14, a Base Station Controller (BSC) 15 connected to the BTS stations 14 by means of A-bis interface connections of known type, and a Mobile Switching Center (MSC center) 16 connected to the BSC station 15 by means of an A-interface connection of known type.

In accordance with the present invention, the BTS stations 14 are capable of receiving "MEASUREMENT REPORT" messages containing the BatteryState bit and of transmitting these messages transparently to the BSC station 15 through the A-bis interface.

The BSC station 15, which is programmed to manage "MEASUREMENT REPORT" messages containing the BatteryState bit, is capable in accordance with the present invention of informing the MSC center 16 of two new events, viz. "battery discharged" and "battery NOT discharged", in addition to the known call states "start of call", "call in progress" and "end of call", as shown in Table 1. These new events are transferred from the BSC station 15 to the MSC center 16 by means of a new A-interface message which will be referred to hereunder as "BATTERY CHANGE" and is based on interpreting the BatteryState bit:

**Table 1**

| | |
|---|---|
| "Start of call" "Call in progress" "End of call" | For any call to a user or terminal on the fixed or mobile network |
| "Battery discharged" | When the BatteryState bit in the "MEASUREMENT REPORT" passes from '0' to '1'; |
| "Battery NOT discharged" | When the BatteryState bit in the "MEASUREMENT REPORT" passes from '1' to '0'. |

This makes it possible to signal both the "battery discharged" event as described above and the "battery NOT discharged" event, which may for example result from connecting the cellular telephone 12 to a battery charger. Thus, only the essential information corresponding to known events and to the battery's transition from the charged state to the discharged state and vice versa are transmitted from the BSC station 15 to the MSC center 16.

In accordance with the present invention, the MSC center 16, which is programmed to manage a new state variable designated as "BATT", is capable of updating this value upon receiving the "BATTERY CHANGE" message as shown in Table 2 below:

**Table 2**

| | |
|---|---|
| Event received from BSC | Value of "BATT" state variable |
| "Start of call" | 0 |
| "Battery discharged" | 1 |
| "Battery NOT discharged" | 0 |

Naturally, the MSC center 16 sets the BATT variable to '0' by default at the beginning of the call.

By means of the BATT state variable, the MSC center 16 can in accordance with one of the characteristic features of the present invention manage the imminent call deactivation condition or restore normal operating conditions in such a way as to cause the activation of predetermined functions whereby these conditions can be signaled to the user or terminal involved as described in detail below with regard to system operation in accordance with the present invention.

Operation of the system 10 is as described below, and is determined by the following variables:
- BATT state variable;
- Call status: "start of call", "call in progress", or "end of call";
- Type of terminal employed by the called party or user (user B terminal): cellular telephone, fixed telephone, or facsimile machine (fax).
After the mobile terminal 12 transmits "MEASUREMENT REPORTS" containing the BatteryState bit and the BCS station 15 signals the "BATTERY CHANGE" event, and depending on BATT state variable updating by the BSC station 15, in fact, the network infrastructure 11 is capable of reacting in predetermined fashion with one of the following possible signals, according to call status and the type of terminal employed by user B:
a) BATT = 0, "start of call", all types of terminal: no indication is provided to the terminal employed by user B;
b) BATT = 0, "call in progress", all types of terminal: no indication is provided to the terminal employed by user B;
c) BATT = 0 → 1, "call in progress", cellular telephone: the mobile network uses known signaling protocols to activate, for example, audible and/or visual signals which inform the terminal employed by user B of the fact that the call is about to be cut off because the battery in the terminal employed by the calling user is discharged;
d) BATT = 0 → 1, "call in progress", fixed telephone: the mobile network uses known signaling protocols to activate, for example, signaling on the fixed telephone network whereby the terminal employed by user B is informed of the fact that the call is about to be cut off by means of audible tones sent to said terminal B;
e) BATT = 0 - 1, "call in progress", fax: the mobile network uses known signaling protocols to activate, for example, signaling on the fixed network whereby the fact that the call is about to be cut off is indicated by means of audible tones sent to the fax speaker. In addition, the fax transmission protocol is used, for example, to present a message on the fax display indicating that the call is about to be cut off because the battery in the terminal employed by the calling user is discharged, and the fax machine is caused to store the received text in memory;
f) BATT = 1→ 0, "call in progress", all types of terminal: all signals indicating imminent call deactivation because of a discharged battery sent to user B are interrupted;
g) BATT = 1, "call in progress", all types of terminal: the signals defined in paragraphs c), d) and e) are maintained and/or repeated;
h) BATT = 1, "end of call", cellular telephone: the signals defined in paragraph c) are interrupted;
i) BATT = 1, "end of call", fixed telephone: the signals defined in paragraph d) are interrupted and, for example, a voice message is sent to user B to inform the latter directly and explicitly that the call is about to be interrupted because the battery in the calling user's terminal is discharged;
j) BATT = 1, "end of call", fax: the signals defined in paragraph e) are interrupted and a voice message is sent to the fax machine speaker informing the latter's user directly and explicitly that the call is about to be interrupted because the battery in the calling user's terminal is discharged, and the terminal employed by user B is caused to print or store the received text in memory, even if said text is incomplete;
k) BATT = 0, "end of call", all types of terminal: no indication is provided to the terminal employed by user B.

It is clear from this description of the operation of the system 10 that providing appropriate state bits in the control messages exchanged at regular intervals between the cellular telephone and the network during a call makes it possible to manage situation of imminent call deactivation in a telecommunications network.

Though this example of an embodiment of the invention has been described with reference to deactivation as a result of discharged cellular telephone batteries, it will be readily apparent to a person skilled in the art that the same approach can also be used for other situations in cases where such situations can be predicted and/or managed with a time that is longer than control message periodicity.

The dimensions, forms, materials components, circuit elements and contacts as contemplated in the foregoing description are capable of modifications in various obvious respects, as are the details of the circuitry and construction as illustrated and of the operating method, all without departing from the scope of the invention.

## Claims

1. A method for signaling the imminent deactivation of a mobile terminal (12) cooperating with a telecommunications network (11), comprising the following stages:
- Detection, on the part of the mobile terminal (12), of a condition of imminent deactivation during a connection with an other terminal;
- Transmission to said network (11) of periodic reports indicating, when present, said condition of imminent deactivation on the part of said mobile terminal (12);
- Management, on the part of said network (11), of said periodic reports indicating said condition of imminent deactivation,
**characterized by** the further stage of
- Signaling, by said network (11), said condition of imminent deactivation by means of predetermined audible and/or visual messages to said other terminal (12).

2. A method in accordance with claim 1, **characterized by** the further stages of
- Interrupting said connection as a result of the deactivation of said mobile terminal (12); and
- Said network (11) signaling said deactivation by means of the predetermined audible and/or visual messages to said other terminal.

3. A method in accordance with claim 1 or 2, **characterized in that** said predetermined messages are selectively transmitted to said other terminal (12) by said network (11) on the basis of whether said other terminal is a cellular telephone, a fixed telephone or a fax machine

4. A method in accordance with any of claims 1 to 3, **characterized in that**, using a mobile terminal energized by a battery power supply (24), the condition of imminent deactivation to be detected is the depletion of said means for power supply (24).

5. A system for signaling the imminent deactivation of a mobile terminal (12) in a telecommunications network (11), where
- Said mobile terminal (12) comprises control means (25) capable of detecting a condition of imminent deactivation during a connection with another terminal;
- Said mobile terminal (12) also comprises means of transmission (25) capable of responding to said condition by transmitting periodic reports indicating when said condition has been detected; and
- Said network (11) also comprises means of management (15) capable of interpreting said periodic reports indicating that said condition has been detected,
**characterized in that**
- Said network (11) also comprises means of signaling (16) capable of interpreting said periodic reports and transmitting predetermined periodic audible and/or visual messages (BATT) indicating said condition during said connection to said other terminal.

6. A system in accordance with claim 5, **characterized in that** the mobile terminal (12) is arranged to transmit said periodic reports at a frequency higher than that of said periodic messages (BATT).

7. A system in accordance with claims 5 or 6, **characterized in that** the network (11) comprises means of selection capable of selecting said predetermined messages (BATT) and transmitting them to said other terminal on the basis of whether said other terminal is a cellular telephone, a fixed telephone, or a fax machine.

## Patentansprüche

1. Verfahren zum Signalisieren der bevorstehenden Deaktivierung einer Mobilstation (12), die mit einem Kommunikationsnetz (11) zusammenarbeitet, mit den folgenden Schritten:
- Detektieren, auf der Seite der Mobilstation (12), eines Zustands der bevorstehenden Deaktivierung während einer Verbindung mit einer anderen Station;
- Übertragen periodischer Berichte an das Netz (11), die, wenn sie vorliegen, den Zustand der bevorstehenden Deaktivierung auf der Seite der Mobilstation (12) angeben;
- Managen, auf der Seite des Netzes (11), der periodischen Berichte, welche den Zustand der bevorstehenden Deaktivierung angeben, **gekennzeichnet durch** den weiteren Schritt:
- Signalisieren des Zustands der bevorstehenden Deaktivierung an die andere Station (12) **durch** vorbestimmte hörbare und/oder visuelle Mitteilungen mittels des Netzes (11).

2. Verfahren nach Anspruch 1, mit den weiteren Schritten:
- Unterbrechen der Verbindung als Reaktion auf die Deaktivierung der Mobilstation (12); und
- Signalisieren der Deaktivierung mittels der vorbestimmten hörbaren und/oder visuellen Mitteilungen an die andere Station mittels des Netzes (11).

3. Verfahren nach Anspruch 1 oder 2, wobei die vorbestimmten Mitteilungen von dem Netz (11) selektiv abhängig davon, ob die andere Station ein Mobiltelefon, eine Festnetztelefon oder ein Faxgerät ist, an die andere Station (12) übertragen werden.

4. Verfahren nach einem der Ansprüche 1 bis 3, wobei beim Verwenden einer Mobilstation, die von einer Batterie-Stromversorgung (24) mit Energie versorgt wird, der zu detektierende Zustand der bevorstehenden Deaktivierung die Erschöpfung der zur Energieversorgung verwendeten Mittel (24) ist.

5. System zum Signalisieren der bevorstehenden Deaktivierung einer Mobilstation (12) in einem Telekommunikationsnetz (11), wobei:
- die Mobilstation (12) Steuermittel (25) umfaßt, die eingerichtet sind, während einer mit einer anderen Station bestehenden Verbindung einen Zustand der bevorstehenden Deaktivierung zu detektieren;
- die Mobilstation (12) ferner Übertragungsmittel (25) umfaßt, die eingerichtet sind, auf den Zustand durch Übertragen periodischer Berichte zu antworten, welche angeben, wann die Bedingung detektiert wurde; und
- das Netz (11) ferner Managementmittel (15) umfaßt, die eingerichtet sind, die periodischen Berichte zu interpretieren, welche angeben, daß der Zustand detektiert wurde, **dadurch gekennzeichnet, daß**
- das Netz (11) ferner Signalisierungsmittel (16) umfaßt, die eingerichtet sind, die periodischen Berichte zu interpretieren und vorbestimmte periodische hörbare und/oder visuelle Mitteilungen (BATT), welche den Zustand angeben, während der Verbindung mit einer anderen Station zu übertragen.

6. System nach Anspruch 5, wobei die Mobilstation (12) geeignet ist, die periodischen Berichte mit einer Frequenz zu übertragen, die höher als die der periodischen Mitteilungen (BATT) ist.

7. System nach Anspruch 5 oder 6, wobei das Netz (11) Auswahlmittel umfaßt, die geeignet sind, die vorbestimmten Mitteilungen (BATT) auszuwählen, und diese abhängig davon, ob die andere Station ein Mobiltelefon, ein Festnetztelefon oder ein Faxgerät ist, an die andere Station zu übertragen.

## Revendications

1. Procédé pour signaler la désactivation imminente d'un terminal mobile (12) coopérant avec un réseau de télécommunications (11), comportant les étapes suivantes :
- la détection, de la part du terminal mobile (12), d'une condition de désactivation imminente pendant une connexion avec un autre terminal,
- la transmission audit réseau (11) de rapports périodiques indiquant, lorsque présente, ladite condition de désactivation imminente de la part dudit terminal mobile (12),
- la gestion, de la part dudit réseau (11), desdits rapports périodiques indiquant ladite condition de désactivation imminente,
**caractérisé par** l'étape supplémentaire consistant à
- signaler, par ledit réseau (11), ladite condition de désactivation imminente par l'intermédiaire de messages audibles et/ou visuels prédéterminés audit autre terminal (12).

2. Procédé selon la revendication 1, **caractérisé par** les étapes supplémentaires
- d'interruption de ladite connexion en résultat de la désactivation dudit terminal mobile (12), et
- ledit réseau (11) signalant ladite désactivation par l'intermédiaire de messages audibles et/ou visuels prédéterminés audit autre terminal.

3. Procédé selon la revendication 1 ou 2, **caractérisé en ce que** lesdits messages prédéterminés sont transmis de manière sélective audit autre terminal (12) par ledit réseau (11) selon que ledit autre terminal est un téléphone cellulaire, un téléphone fixe ou un télécopieur.

4. Procédé selon l'une quelconque des revendications 1 à 3, **caractérisé en ce que**, en utilisant un terminal mobile alimenté par une alimentation ou énergie de type batterie (24), la condition de désactivation imminente à détecter est l'épuisement desdits moyens d'alimentation du énergie(24).

5. Système pour signaler la désactivation imminente d'un terminal mobile (12) dans un réseau de télécommunications (11), dans lequel
- ledit terminal mobile (12) comporte des moyens de commande (25) capables de détecter une condition de désactivation imminente pendant une connexion à un autre terminal,
- ledit terminal mobile (12) comportant également des moyens de transmission (25) capables de répondre à ladite condition en transmettant des rapports périodiques indiquant lorsque ladite condition a été détectée, et
- ledit réseau (11) comportant également des moyens de gestion (15) capables d'interpréter lesdits rapports périodiques indiquant que ladite condition a été détectée,
**caractérisé en ce que**
- ledit réseau (11) comporte également des moyens de signalisation (16), capables d'interpréter lesdits rapports périodiques et de transmettre des messages audibles et/ou visuels périodiques prédéterminés (BATT) indiquant ladite condition pendant ladite connexion audit autre terminal.

6. Système selon la revendication 5, **caractérisé en ce que** le terminal mobile (12) est conçu pour transmettre lesdits rapports périodiques à une fréquence supérieure à celle desdits messages périodiques (BATT).

7. Système selon la revendication 5 ou 6, **caractérisé en ce que** le réseau (11) comporte des moyens de sélection capables de sélectionner lesdits messages prédéterminés (BATT) et de transmettre ceux-ci audit autre terminal selon que ledit autre terminal est un téléphone cellulaire, un téléphone fixe ou un télécopieur.
